# EUROPEAN PATENT SPECIFICATION

(11) **EP 1 278 251 B1**
(45) Date of publication and mention of the grant of the patent: **21.06.2006**
(21) Application number: 02014060.4
(22) Date of filing: 01.07.2002
(51) Int. Cl.: H01M 2/02, H01M 10/50

(54) **Cooling arrangement on Case of Secondary Battery**
Kühlvorrichtung an der Gehäuse einer sekundären Batterie
Arrangement de refroidissement sur le boitier d'une batterie secondaire

(30) Priority: 02.07.2001 JP 2001200855
(43) Date of publication of application: 22.01.2003
(73) Proprietor: MATSUSHITA ELECTRIC INDUSTRIAL CO., LTD., Kadoma-shi, Osaka 571-8501 (JP); Toyota Jidosha Kabushiki Kaisha, Toyota-shi, Aichi 471-8571 (JP)
(72) Inventor: Ogata, Yoshiaki, Toyohashi-shi, Aichi 441-8054 (JP); Etoh, Toyohiko, Toyota-shi, Aichi 471-0814 (JP)
(74) Representative: Balsters, Robert

(56) References cited:
- EP-A- 0 881 696
- EP-A- 1 117 138
- FR-A- 2 742 002
- US-A- 5 492 779
- PATENT ABSTRACTS OF JAPAN vol. 1995, no. 04, 31 May 1995 (1995-05-31) & JP 07 014616 A (JAPAN STORAGE BATTERY CO LTD), 17 January 1995 (1995-01-17)

## Description

### BACKGROUND OF THE INVENTION

### 1. FIELD OF THE INVENTION:

The present invention relates to a secondary battery used in an electric vehicle or the like. Specifically, the present invention relates to a thin rectangular-parallelepiped shaped secondary battery having an improved cooling efficiency.

### 2. DESCRIPTION OF THE RELATED ART:

A secondary battery which can be repeatedly charged and discharged is used as a power source of a motor in various types of electric vehicles, for example, a hybrid electric vehicle or the like. A secondary battery, when used in an electric vehicle, is required to have a large capacity of electricity and a high voltage. Therefore, a plurality of secondary batteries are combined to form a battery pack and the battery pack is mounted in a vehicle.

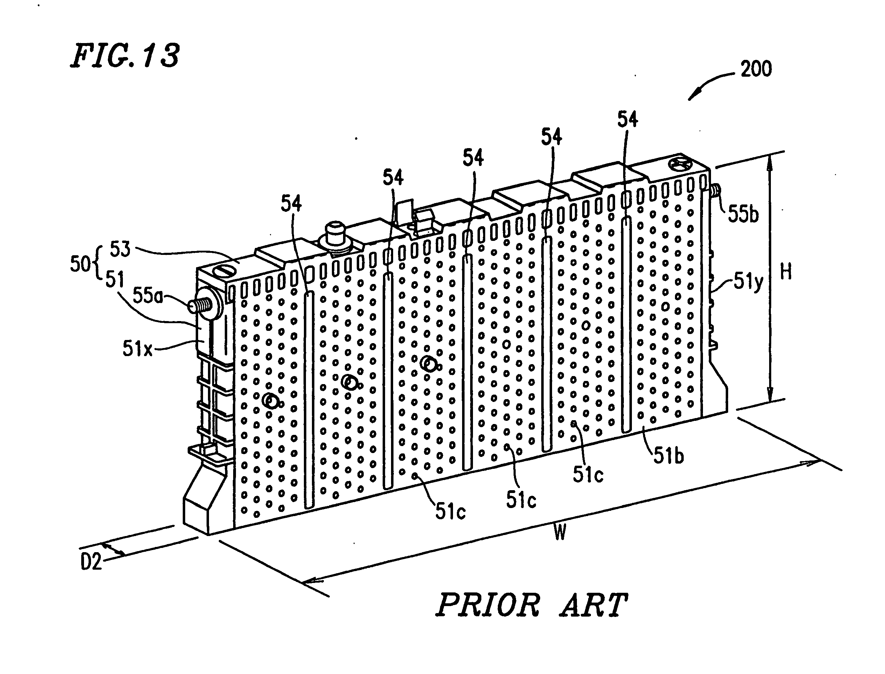

Figure **13** is a perspective view showing an exemplary secondary battery **200** which forms a battery pack to be mounted in an electric vehicle. The secondary battery **200** has a battery case **50.** The battery case **50** has a battery case body **51** formed into a thin rectangular-parallelepiped shape having an open top and a strip-like cover **53** for covering the open top of the battery case body **51.**

The thin rectangular-parallelepiped shaped battery case **50** has a small thickness **D2,** a height **H** greater than the thickness **D2,** and a width **W** greater than the height **H.**

An inner space of the battery case body **51** is divided into, for example, six reaction chambers by five walls extending in the thickness **D2** direction, equally spaced in the width **W** direction. Each of the reaction chambers contains a plurality of positive plates and a plurality of negative plates which extend in the width **W** direction of the battery case **50.**

In each reaction chamber, the positive plates and the negative plates are provided, being insulated from each other by separators. All the positive plates in the reaction chamber are connected to a positive pole collector plate extending in the thickness **D2** direction. All the negative plates in the reaction chamber are connected to a negative pole collector plate extending in the thickness **D2** direction. The positive pole collector plate and the negative pole collector plate oppose each other within the reactive chamber with all the positive plates and the negative plates interposed therebetween. All the positive plates and the negative plates, and the collector plates are in contact with an electrolyte in the reaction chamber.

On a side surface **51x** of the battery case body **51**, a terminal **55a** of the positive pole is provided. This terminal **55a** is serially connected to the positive pole collector plate positioned in the reaction chamber adjacent to the surface **51x.** On another side surface **51y** of the battery case body **51,** a terminal **55b** of the negative pole is provided. This terminal **55b** is serially connected to the collector plate of the negative pole positioned in the reaction chamber adjacent to the surface **51y.** The positive pole collector plate and the negative pole collector plate are serially connected to the respective positive pole collector plate and the negative pole collector plate in an adjacent reaction chamber.

A plurality of the secondary batteries **200** having the above-described structure are stacked side-by-side in the thickness **D2** direction and connected in series or in parallel to each other to form a battery pack. The battery pack is mounted in an electric vehicle.

The secondary battery **200** has a problem that, due to a reaction resistance caused by a battery reaction and component resistance caused by collecting electricity and connection between the components, a temperature in the reaction chamber rises and thus a temperature of the battery case **50** rises. Especially, when a large amount of current is charged and/or discharged, temperature of the battery case **50** rises significantly. If the temperature in the reaction chamber rises, battery reaction in the reaction chamber is weakened. Thus, cooling air is supplied and passed through the space between a pair of stacked secondary batteries in the height **H** direction (e.g., from the bottom to the top of the battery case **50** in Figure **13)** to cool the battery case **50** of the secondary battery.

A secondary battery **200** has ribs **54** which extend in the height **H** direction on each surface **51b** along the width **W** direction of the battery case body **51** with a certain space therebetween in the width **W** direction for smoothly passing the cooling air through the spaces between the pair of the stacked secondary batteries. By keeping the ribs **54** of one secondary battery in contact with those of an adjacent secondary battery in a structure in which the batteries **200** are stacked side-by-side, spaces for passing the cooling air are formed between the surfaces **51b** of the secondary batteries **200.** The secondary battery **200** is cooled by passing the cooling air through these spaces.

A number of protrusions **51c** are provided on the surfaces 51b of the battery case body **51** to improve a resistance of the secondary battery **200** against pressure.

In recent years, for improving a power output of such a thin rectangular-parallelepiped shaped secondary battery **200** at a low temperature, the capacity of the secondary battery **200** is increased by increasing only the thickness **D2** of the battery case **50** to increase the number of the plates contained in each reaction chamber.

However, such an attempt to increase the capacity causes a problem that the temperature in the each reaction chamber is further raised by the heat of reaction. As described above, in such a secondary battery **200**, each reaction chamber is cooled by passing the cooling air along the surfaces **51b** of the battery case **51.** If only the thickness **D2** of the battery case **51** of the secondary battery **200** is increased, an area for radiating heat due to cooling air does not increase. Thus, each chamber cannot be sufficiently cooled.

EP-A-1 117 138 discloses a battery comprising a battery case formed into a thin rectangular-parallelepiped shape, and whose inner space is divided into a plurality of reaction chambers by walls extending in the thickness direction formed with an appropriate space therebetween in a width direction. One radiator is provided on an entire external surface of the battery case.

US-A-5 492 779 discloses a battery having outwardly projecting external ribs extending in a direction perpendicular to the width of the battery.

EP-A-0 881 693 and FR-A-2 742 002 disclose a battery having an external surface comprising vertical protruding parts and a plate covering the entire surface of the external surface of the battery, wherein the space, formed between the external surface of the battery and the plate due to the protruding parts, is provided to allow a cooling fluid to circulate on the external surface of the battery to cool the battery.

JP-A-01 014616 discloses a battery pack including a plurality of batteries spaced by a spacer to allow air to circulate into the space between the battery to cool the battery.

### SUMMARY OF THE INVENTION

According to one aspect of the present invention, there is provided a secondary battery comprising : a battery case formed of a synthetic resin and formed into a thin rectangular-parallelepiped shape, and whose inner space is divided into a plurality of reaction chambers by walls formed with an appropriate space therebetween in a width direction ; and a plurality of radiators respectively provided on an external surface along the width direction of the battery case so as to correspond to the reaction chambers; and wherein each of said radiators are separated from each other in a width direction.

In one embodiment of the present invention, each of the radiators is formed of a metal plate which has a high heat conductivity.

In one embodiment of the present invention, the radiators are integrally formed with the battery case by insert molding.

In one embodiment of the present invention, a plurality of grooves extending in the width direction of the battery case and a plurality of grooves extending in a height direction are provided on a surface of each radiator.

In one embodiment of the present invention, each of the radiators is formed of a plurality of radiation pieces located along the width direction of the battery case and the height direction.

In one embodiment of the present invention, each of the radiators comprises a plurality of convex stripes extending in the height direction of the battery case.

In one embodiment of the present invention, the convex stripes of each of the radiators protrude from the surface along the width direction of the battery case.

Thus, the invention described herein makes possible the advantages of providing a secondary battery in which it is capable to cool a battery case even if a thickness of the battery case is increased.

These and other advantages of the present invention will become apparent to those skilled in the art upon reading and understanding the following detailed description with reference to the accompanying figures.

### BRIEF DESCRIPTION OF THE DRAWINGS

Figure **1** is a perspective view showing an example of a secondary battery according to the present invention.
Figure **2** is a perspective view showing a radiator used in the secondary battery of Figure **1**.
Figure **3** is a cross-sectional view showing a portion of the combined secondary batteries of Figure **1**.
Figure **4** is a perspective view showing another radiator used in the secondary battery according to the present invention.
Figure **5** is an enlarged view of the portion indicated by **A** in Figure **4.**
Figure **6** is a perspective view showing another example of the radiator used in the secondary battery according to the present invention.
Figure **7** is an enlarged view of the portion indicated by **B** in Figure **6**.
Figure **8** is a perspective view showing yet another radiator used in the secondary battery according to the present invention.
Figure **9** is an enlarged view of the portion indicated by **C** in Figure **8.**
Figure **10** is a perspective view showing a portion of yet another radiator used in the secondary battery according to the present invention.
Figure **11** is a cross-sectional view of an essential portion of the combined secondary batteries used in the secondary battery according to the present invention.
Figure **12** is a cross-sectional view of an essential portion of the combined secondary batteries used in the secondary battery according to the present invention.
Figure **13** is a perspective view showing an example of a conventional secondary battery.

### DESCRIPTION OF THE PREFERRED EMBODIMENTS

Hereinafter, examples of the present invention will be described with reference to the drawings.

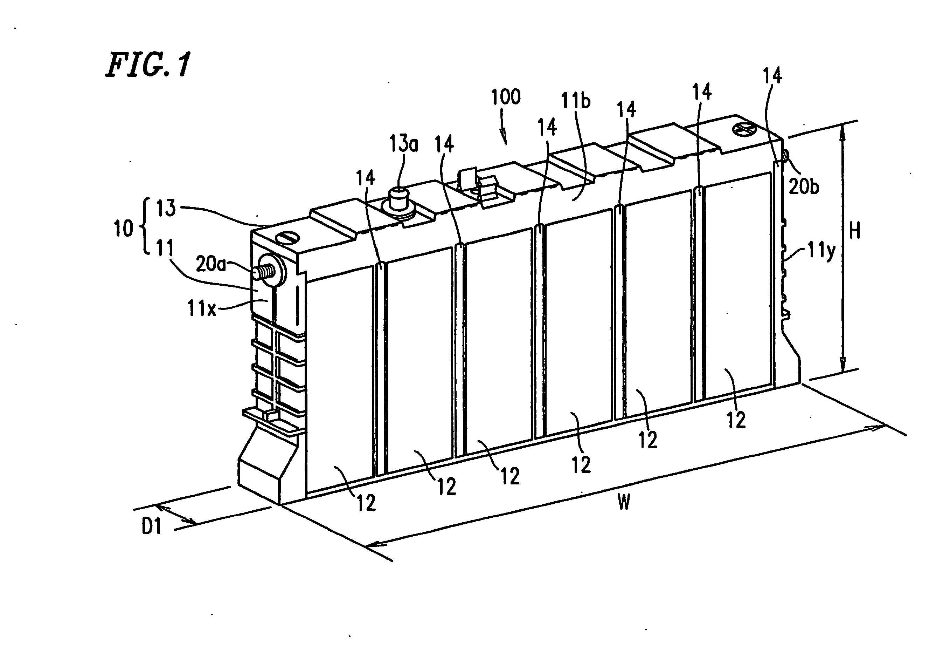

Figure **1** is a perspective view showing an exemplary secondary battery **100** according to an example of the present invention. The secondary battery **100** is a Nickel-metal hydride battery, for example. A plurality of the secondary batteries **100** are combined to be used as a power source of a motor in an electric vehicle. As shown in Figure **1**, the secondary battery comprises a battery case **10**. The battery case **10** contains pole plates and an electrolyte. The battery case **10** has a thin rectangular-parallelepiped shaped battery case body **11** having an open top and a strip-like cover **13** for covering the open top of the battery case body **11.**

The battery case **10** is integrally formed of a synthetic resin. A thickness **D1** of the battery case **10** is twice as large as the thickness **D2** of the conventional thin rectangular-parallelepiped shaped secondary battery shown in Figure **13** so as to increase a power output of the secondary battery **100** while maintaining a low temperature. A height **H** and a width **W** of the battery case **10** are approximately equal to the height **H** and the width **W** of the conventional battery case **50** shown in Figure **13.** The height **H** is greater than the thickness **D1** and the width **W** is greater than the height **H.**

An inner space of the battery case body **11** is divided into, for example, six reaction chambers by five walls extending in the thickness **D1** direction, equally spaced in the width **W** direction. Each of the reaction chambers contains a plurality of positive plates and a plurality of negative plates which extend in the width **W** direction of the battery case **10.**

In each reaction chamber, the positive plates and the negative plates are provided, being insulated from each other by separators. All the positive plates in the reaction chamber are connected to a positive pole collector plate extending in the thickness **D1** direction. All the negative plates in the reaction chamber are connected to a negative pole collector plate extending in the thickness **D1** direction. The positive pole collector plate and the negative pole collector plate oppose to each other within the reactive chamber with all the positive plates and the negative plates interposed therebetween. All the positive plates and the negative plates, and the collector plates are in contact with an electrolyte in the reaction chamber.

On a side surface **11x** of the battery case body **11**, a terminal **20a** of the positive pole is provided. This terminal **20a** is serially connected to the positive pole collector plate positioned in the reaction chamber adjacent to the surface **11x.** On another side surface **11y** of the battery case body **11,** a terminal **20b** of the negative pole is provided. This terminal **20b** is serially connected to the negative pole collector plate positioned in the reaction chamber adjacent to the surface **11y.** The positive pole collector plates and the negative pole collector plates in the reaction chambers are serially connected to each other except for the reaction chambers located on both ends (in thewidth Wdirection) of the battery case **10**, whose collector plates are connected to the terminals **20a** and **20b,** respectively.

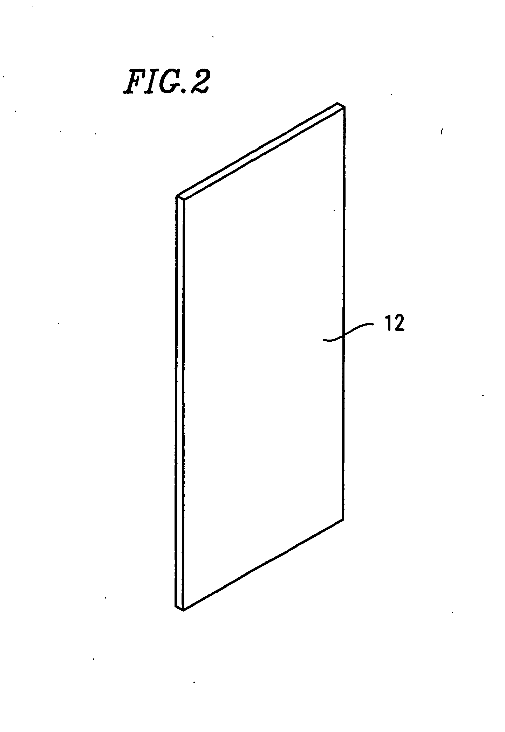

On a side surface(s) **11b** of the battery case body **11** along the width **W** direction, ribs **14** extending in the height **H** direction (e.g., from the bottom to the top of the battery case **10** in Figure **1)** are provided so as to correspond to walls provided inside the battery case body **11.** The ribs **14** extending in the height **H** direction are also provided on edge areas of the side surfaces **11b,** which are close to the side surfaces **11x** and **11y,** in the battery case body **11.** Between a pair of the ribs **14** located adjacent to each other, a radiator **12** as shown in Figure **2** is provided.

The radiators **12** are formed of a metal plate such as aluminum or stainless steel, which has a high heat conductivity, and formed into a rectangular shape in a corresponding size on an inner surface along width **W** direction in a reaction chamber provided in the battery case body **11**. An entire surface of the radiator **12** is flat.

The radiators **12** are buried into surfaces **11b** of the battery case body **11** so as to oppose the reaction chambers by using, for example, insert molding.

The cover **13** provided on top of the battery case body **11** is formed of a synthetic resin similar to that used for the battery case body **11** so as to be in a strip form and integrally attached to an upper portion of the battery case body **11.** The cover **13** comprises a gas emitting outlet **13a** for venting internal gas to the outside when the inner pressure in the reactive chamber rises to a predetermined value or above.

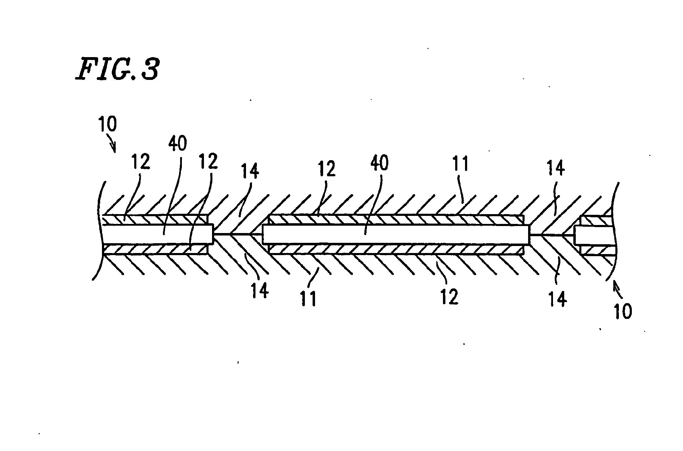

A plurality of the secondary batteries **100** having the above-described structure are stacked side-by-side in the thickness **D1** direction of the battery case **10** and the stacked secondary batteries are connected in series or in parallel to each other to form a battery pack. In such a structure, the secondary batteries are stacked side-by-side so that the ribs **14** provided on one secondary battery are in contact with those provided on an opposing secondary battery. Figure **3** is a cross-sectional view showing a portion of the combined secondary batteries. As shown in Figure **3,** spaces **40** are formed between the stacked secondary batteries **100,** and between a pair of the ribs **14** contacting each other and an adjacent pair of the ribs **14** contacting each other.

In the battery pack comprising a number of secondary batteries **100** combined with each other, cooling air for cooling the secondary batteries **100** is provided toward the lower portion of the secondary battery **100.** The cooling air provided toward the lower portion of the secondary battery **100** passes through the spaces **40** between a pair of stacked secondary batteries **100** from the bottom to the top (i.e., in relation to Figure **1**). Thus, the secondary batteries **100** located on both sides of the spaces **40** are cooled by the cooling air.

The radiators **12** attached to the surfaces **11b** of the battery cases **10** of the secondary batteries 100 are in contact with the spaces **40** through which the cooling air passes. Therefore, the cooling air which flows through the spaces **40** efficiently cools down the radiators **12,** and thus the surfaces **11b** of the battery cases **10** of the secondary batteries **100** to which the radiators **12** are attached can be efficiently cooled.

The secondary battery **100** shown in Figure **1** has a relatively large thickness **D1** of the battery case **10** and the number of positive plates and the negative plates contained in the reaction chambers of the battery case **10** is relatively increased with respect to the conventional secondary batteries. Thus, the current for charging and/or discharging the battery increases and temperature rise in the reaction chamber is promoted. However, since the radiators **12** are provided on the surfaces **11b** of the battery case **10** so as to correspond to the reaction chambers, the radiators **12** are efficiently cooled by the cooling air passing through the spaces **40.** Thus, the surfaces **11b** of the battery case **10** are efficiently cooled. The cooling of the reaction chambers is promoted. As a result, the temperature rise in the reaction chamber is suppressed.

As described above, the secondary battery **100** according to the present invention ensures suppression of the temperature rise in the reaction chamber even if the thickness **D1** is increased and the temperature rise in the reaction chambers is promoted. Therefore, the secondary battery **100** according to the present invention can be used in a stable manner for a long time.

The surfaces **11b** of the battery case body **11** of the battery case **10** which is made of a synthetic resin are covered with the radiators **12** which are made of metal. Thus, moisture or hydrogen gas in the reaction chambers is prevented from permeating the surfaces **11b** of the battery case body **11** made of a synthetic resin and leaking out of the reaction chambers. Therefore, the secondary battery **100** according to the present invention can be used in an increased stable manner for a long time.

The radiators **12** provided so as to correspond to the reaction chambers extend in the height **H** direction which is a direction for passing through the cooling air. In the reaction chambers, for example, a temperature at the upper portion may be higher than the temperature at the lower portion due to the temperature rise. However, since the cooling air passes from the bottom to the top of the secondary battery and the radiators **12** having a high heat conductivity radiate heat in a uniform manner, the temperatures in the reaction chambers can be uniformalized throughout the reaction chambers. When the radiators **12** are not provided for each of the reaction chambers, and the cooling air is not provided, the battery case **10** has maximum temperature of 50°C at the upper portion and 40°C at the lower portion. However, by providing the radiators **12** and passing the cooling air from the bottom to the top, the maximum temperature is uniformalized to about 45°C throughout the whole battery case **10.**

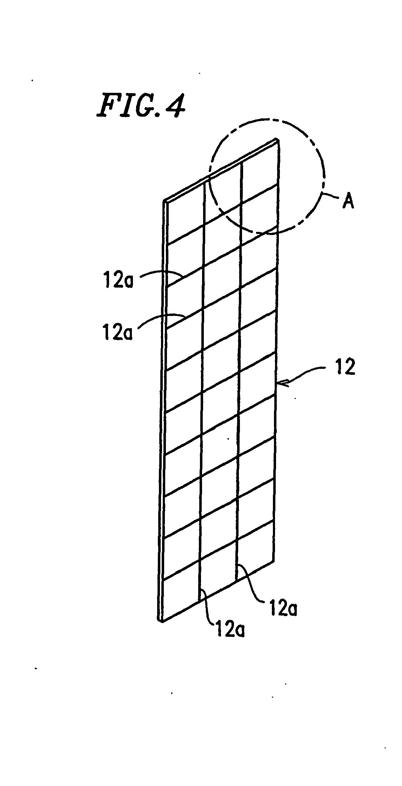

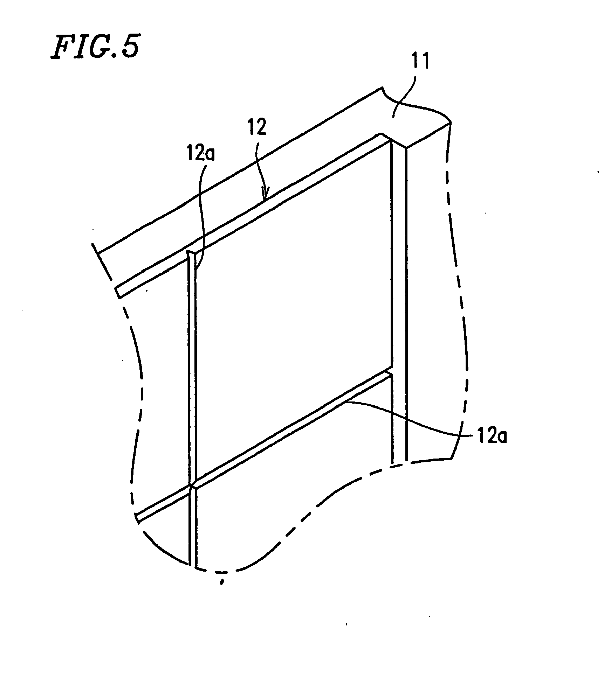

Figure **4** is a perspective view showing another example of the radiator **12.** Figure **5** is an enlarged view of a portion indicated by **A** in Figure **4.** As described above, the radiators **12** are formed of a metal plate, such as aluminum, which has a high conductivity, and formed into a rectangle shape of a predetermined size. On both side surfaces, grooves **12a** having V-shape cross sections are provided along the height **H** direction and the width **W** direction with a certain space therebetween. The cross sections of grooves **12a** are not limited to V-shape. The cross sections of grooves **12a** can be U-shape, or another similar shape.

The radiators **12** having the above-described structure are attached to the surfaces **11b** of the battery case body **11** of the battery case **10** of the secondary battery **100** so as to correspond to the respective reaction chambers. Therefore, the battery case **10** can be efficiently cooled by the radiators **12** attached to the surfaces **11b** and can be used in a stable manner for a long time.

If the pressure in the reaction chambers increases due to an electrochemical reaction occurs in the reaction chamber, the battery case **10** may bend in the width **W** direction, for example. In the battery case **10,** on the surfaces **11b** of the battery case body **11**, a plurality of the radiators **12** are located in parallel along the width **W** direction. Each radiator **12** has the grooves **12a** extending in the width **W** direction or the height **H** direction. Therefore, the radiators **12** bends so as to conform to the bend in the battery case body **11.** Therefore, the radiators **12** are not peeled off from the surfaces **11b** of the battery case body **11** and the radiators **12** are not damaged.

Even when the battery case body **11** of the battery case **10** bends along the height **H** direction, since the radiators **12** comprise the grooves **12a** extending in the width **W** direction, the radiators **12** bend so as to conform the bend along the height **H** direction of the battery case body **11.** Therefore, the radiators **12** is not be peeled off from the surfaces **11b** of the battery case body **11** and the radiators **12** may not be damaged.

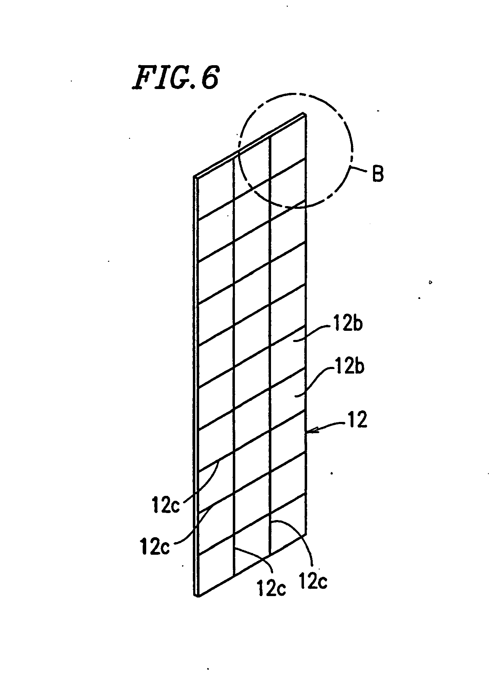

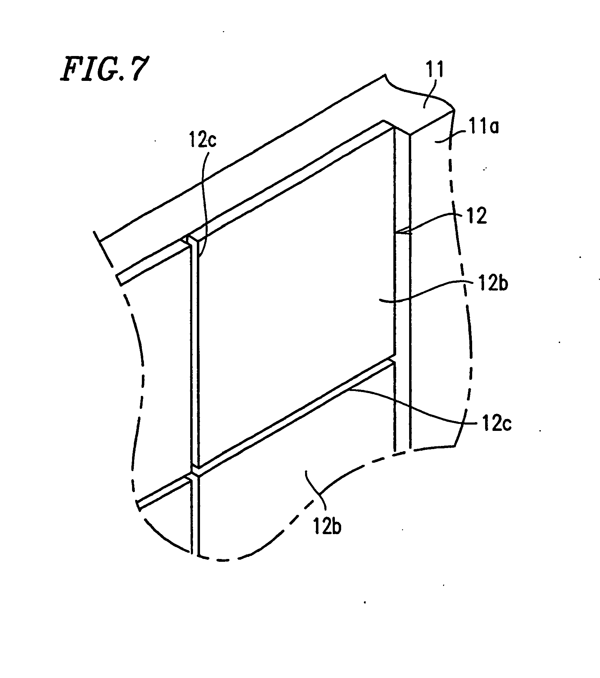

Figure **6** is a perspective view showing another example of the radiator **12.** Figure **7** is an enlarged view of a portion indicated by **B** in Figure **6.** The radiators **12** are formed of a number of radiation pieces **12b** formed of a metal plate such as aluminum, which has a high heat conductivity. On areas corresponding to the respective reaction chambers on the surfaces **11b** of the battery case body **11,** the radiation pieces **12b** are provided in a grid pattern along the height H direction and the width Wdirection, with slits **12c** therebetween, and buried into the surfaces **11b**.

Thus, since the radiators **12** are formed of a number of the radiation pieces **12b** separated from each other, the radiators **12** further conforms to the bend of the battery case body **11**. Since the radiators **12** are separated from each other, even if the battery case body **11** bends, the radiators **12** are not damaged.

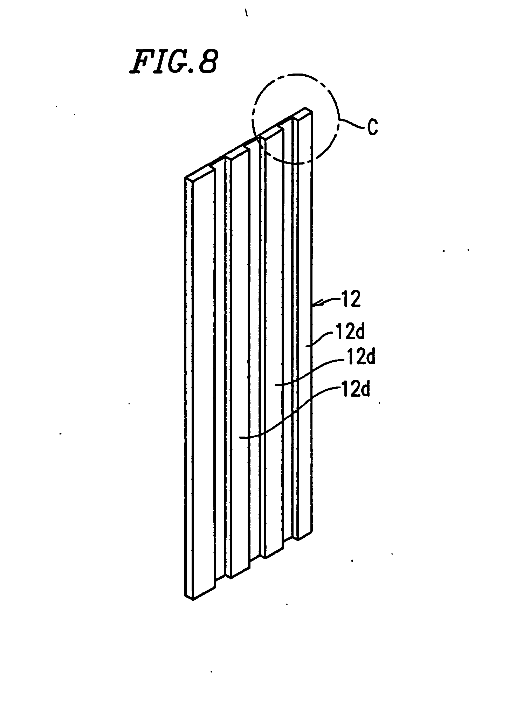

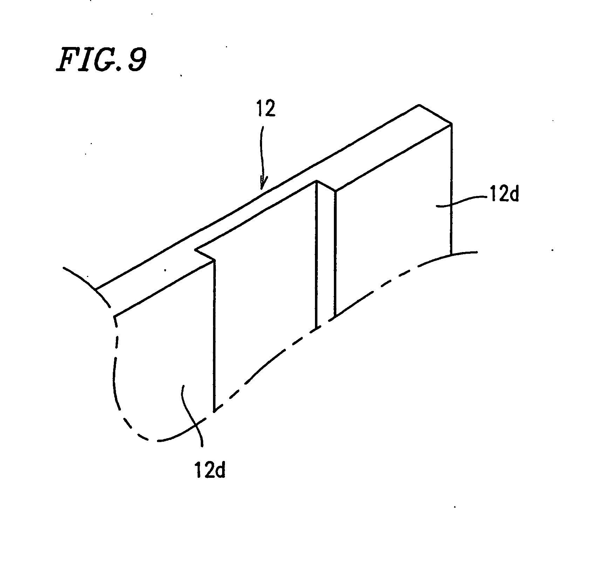

Figure **8** is a perspective view showing yet another example of the radiator **12.** Figure **9** is an enlarged view of a portion indicated by **C** in Figure **8.** The radiators **12** are formed of a metal plate, such as aluminum, which has a high heat conductivity. On a surface which is in contact with the spaces **40** when the secondary batteries **100** are stacked side-by-side, a plurality of convex stripes **12d** extending in the height **H** direction are provided with an equal space therebetween in the width **W** direction. For example, the convex stripes **12d** are formed by cutting grooves having constant widths along the height **H** direction in a surface of a metal plate. In the battery case body **11** having such a structure, since the radiators **12** are buried into the surfaces **11b** of the battery case body **11,** the convex stripes **12d** are not protruded from the surfaces **11b** of the battery case body **11.**

In the radiators **12** having the above-described structure, the convex stripes **12d** are located in the spaces **40** formed by stacking a pair of the secondary batteries **100** side-by-side. Therefore, the surface area of the radiators **12** to be in contact with the cooling air flowing through the spaces **40** increases and the radiators **12** are efficiently cooled.

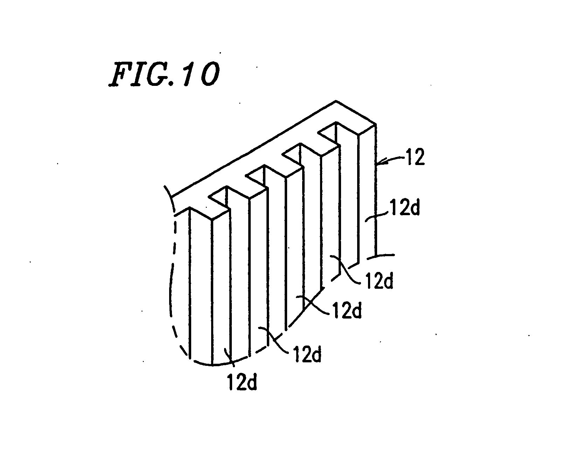

Figure **10** is a perspective view showing yet another example of the radiator **12.** Similar to the radiators **12** shown in Figures **8** and **9,** the radiators **12** shown in Figure **10** are formed of a metal plate, such as aluminum, which has a high heat conductivity. A plurality of the convex stripes **12d** extending along the height **H** direction are formed with equal spaces therebetween in the width **W** direction. The convex stripes **12d** are formed so that, when the radiators **12** are buried into areas corresponding to the reaction chambers on the surfaces **11b** of the battery case body **11,** the convex stripes **12d** protrude from the surfaces **11b** of the battery case body **11** and align with a surface of the ribs **14** provided on the surfaces **11b.** The interval between the convex stripes **12d** shown in Figure **10** is smaller than the interval between the convex stripes **12d** provided on the radiators **12** shown in Figures **8** and **9.**

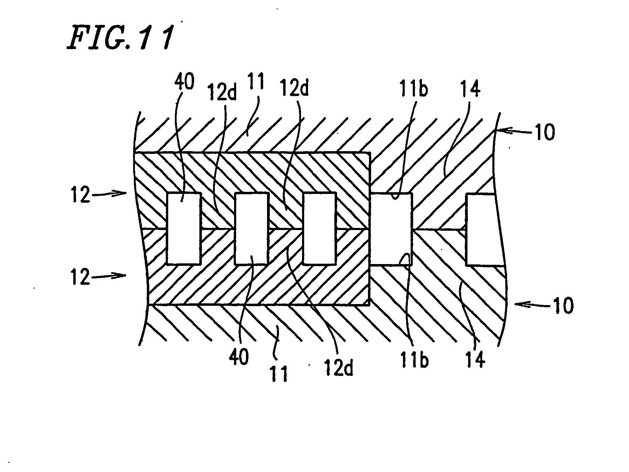

As shown in Figure **11,** when the secondary batteries **100** which comprise the radiators **12** having the above-described structure are stacked side-by-side, the ribs **14** provided on one secondary battery are in contact with those provided on an opposing secondary battery. The convex stripes **12d** of one secondary battery are also in contact with those of an opposing secondary battery. Thus, the spaces **40** for passing through the cooling air are formed between a pair of the convex stripes **12d** contacting each other and an adjacent pair of the convex stripes **12d** contacting each other.

By passing the cooling air through the spaces **40,** the radiators **12** are cooled. Since the convex stripes **12d** are provided in the radiators **12** shown in Figure **11,** the surface area to be in contact with cooling air increases and the radiators **12** are efficiently cooled.

Moreover, since the cooling air passes through the spaces having the small cross sections defined by the convex stripes **12d** provided on the radiators **12**, the flow velocity of the cooling air increases, thereby further efficiently cooling the radiators **12.**

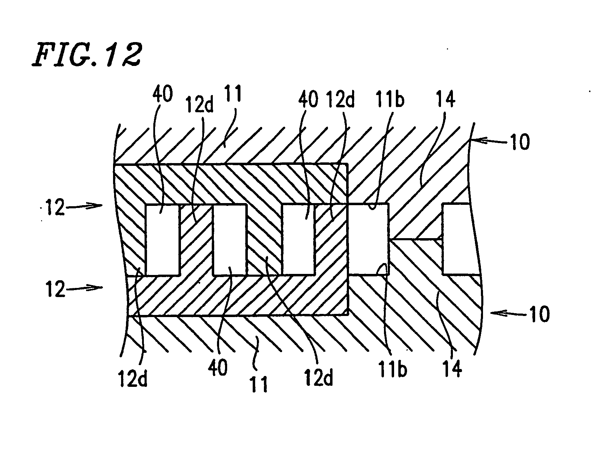

The structure of the convex stripes **12d** formed on the radiators **12** is not limited to the structure in which a pair of the convex stripes **12d** are in contact with each other when the secondary batteries **100** are stacked side-by-side. Instead, as shown in Figure **12,** the convex stripes **12d** may be protruded further to contact the middle portion between two adjacent convex stripes **12d** of the opposite radiators **12** rather than the convex stripes **12d** of each of,the radiators **12** contacting each other.

As described above, the spaces **40** are formed by the convex stripes **12d** interdigitated with each other, which are provided on each of the radiators **12** contacting each other. By passing the cooling air through the spaces **40,** the radiators **12** are cooled. Since the convex stripes **12d** are provided in the radiators **12** shown in Figure **12,** the surface area to be in contact with cooling air flowing through the spaces **40** increases and the radiators **12** are efficiently cooled.

Moreover, since the cooling air passes through the spaces having the small cross sections defined by the convex stripes **12d** provided on the radiators **12**, the flow velocity of the cooling air increases, thereby further efficiently cooling the radiators **12.**

According to the present invention, on the surface of the battery case of the secondary battery, which is formed of a synthetic resin and formed into a thin rectangular-parallelepiped shape, radiators are provided so as to correspond to the respective reaction chambers provided inside the battery case, and thus the reaction chambers are efficiently cooled. As a result, even when the thickness of the battery case is increased due to an increase in the number of the pole plates in the reaction chamber, the temperature rise within the chamber can be suppressed.

Various other modifications will be apparent to and can be readily made by those skilled in the art without departing from the scope of this invention. Accordingly, it is not intended that the scope of the claims appended hereto be limited to the description as set forth herein, but rather that the claims be broadly construed.

## Claims

1. A secondary battery comprising:
a battery case formed of a synthetic resin and formed into a thin rectangular-parallelepiped shape, and whose inner space is divided into a plurality of reaction chambers by walls formed with an appropriate space therebetween in a width direction; and
a plurality of radiators respectively provided on an external surface along the width direction of the battery case so as to correspond to the reaction chambers; and
wherein each of said radiators are separated from each other in a width direction.

2. A secondary battery according to claim 1, wherein each of the radiators is formed of a metal plate which has a high heat conductivity.

3. A secondary battery according to claim 1, wherein the radiators are integrally formed with the battery case by insert molding.

4. A secondary battery according to claim 1, wherein a plurality of grooves extending in the width direction of the battery case and a plurality of grooves extending in a height direction are provided on a surface of each radiator.

5. A secondary battery according to claim 1, wherein each of the radiators is formed of a plurality of radiation pieces located along the width direction of the battery case and the height direction.

6. A secondary battery according to claim 1, wherein each of the radiators comprises a plurality of convex stripes extending in the height direction of the battery case.

7. A secondary battery according to claim 6, wherein the convex stripes of each of the radiators protrude from the surface along the width direction of the battery case.

## Patentansprüche

1. Sekundäre Batterie, die umfasst:
ein Batteriegehäuse, das aus Kunstharz gebildet ist und in eine dünne, rechtwinklig-parallelepipedische Form geformt ist und dessen Innenraum durch Wände, zwischen denen in Breitenrichtung ein geeigneter Abstand vorhanden ist, in mehrere Reaktionskammern unterteilt ist; und
mehrere Kühler, die an einer äußeren Oberfläche in Breitenrichtung des Batteriegehäuses vorgesehen sind, so dass sie den Reaktionskammern entsprechen; und
wobei die Kühler in Breitenrichtung jeweils voneinander getrennt sind.

2. Sekundäre Batterie nach Anspruch 1, bei der jeder der Kühler aus einer Metallplatte gebildet ist, die eine hohe Wärmeleitfähigkeit hat.

3. Sekundäre Batterie nach Anspruch 1, bei der die Kühler durch Einsatzgießen einteilig mit dem Batteriegehäuse ausgebildet sind.

4. Sekundäre Batterie nach Anspruch 1, bei der auf einer Oberfläche jedes Kühlers mehrere Nuten, die sich in Breitenrichtung des Batteriegehäuses erstrecken, und mehrere Nuten, die sich in Höhenrichtung erstrecken, vorgesehen sind.

5. Sekundäre Batterie nach Anspruch 1, bei der jeder der Kühler aus mehreren Abstrahlungsteilen gebildet ist, die in Breitenrichtung des Batteriegehäuses und in Höhenrichtung angeordnet sind.

6. Sekundäre Batterie nach Anspruch 1, bei der jeder der Kühler mehrere konvexe Streifen aufweist, die sich in der Höhenrichtung des Batteriegehäuses erstrecken.

7. Sekundäre Batterie nach Anspruch 6, bei der die konvexen Streifen jedes der Kühler von der Oberfläche in Breitenrichtung des Batteriegehäuses vorstehen.

## Revendications

1. Batterie d'accumulateurs comprenant :
un boîtier de batterie formé d'une résine synthétique et formé en une forme de parallélépipède rectangle mince, et dont l'espace intérieur est divisé en une pluralité de chambres de réaction par des parois formées avec un espace approprié entre celles-ci dans le sens de la largeur, et
une pluralité de radiateurs disposés respectivement sur une surface externe suivant le sens de la largeur du boîtier de batterie de façon à correspondre aux chambres de réaction, et
dans laquelle chacun desdits radiateurs est séparé d'un autre dans le sens de la largeur.

2. Batterie d'accumulateurs selon la revendication 1, dans laquelle chacun des radiateurs est formé d'une plaque métallique qui présente une conductivité thermique élevée.

3. Batterie d'accumulateurs selon la revendication 1, dans laquelle les radiateurs sont formés en une pièce avec le boîtier de batterie par moulage avec un insert.

4. Batterie d'accumulateurs selon la revendication 1, dans laquelle une pluralité de gorges s'étendant dans le sens de la largeur du boîtier de batterie et une pluralité de gorges s'étendant dans le sens de la hauteur sont réalisées sur une surface de chaque radiateur.

5. Batterie d'accumulateurs selon la revendication 1, dans laquelle chacun des radiateurs est formé d'une pluralité d'éléments de rayonnement positionnés suivant le sens de la largeur du boîtier de batterie et le sens de la hauteur.

6. Batterie d'accumulateurs selon la revendication 1, dans laquelle chacun des radiateurs comprend une pluralité de bandes convexes s'étendant dans le sens de la hauteur du boîtier de batterie.

7. Batterie d'accumulateurs selon la revendication 6, dans laquelle les bandes convexes de chacun des radiateurs dépassent de la surface suivant le sens de la largeur du boîtier de batterie.
